# EUROPÄISCHE PATENTSCHRIFT

(11) **EP 3 855 078 B1**
(45) Veröffentlichungstag und Bekanntmachung des Hinweises auf die Patenterteilung: **02.03.2022**
(21) Anmeldenummer: 20152954.2
(22) Anmeldetag: 21.01.2020
(51) Int. Cl.: F24D 10/00

(54) **FERNWÄRME-HEIZUNGSANLAGE UND VERFAHREN ZUM ÜBERWACHEN EINER ABNEHMERSEITIGEN FERNWÄRME-HEIZUNGSANLAGE**
DISTRICT HEATING SYSTEM AND METHOD FOR MONITORING A DISTRICT HEATING SYSTEM CONSUMER
INSTALLATION DE CHAUFFAGE À DISTANCE ET PROCÉDÉ DE SURVEILLANCE D'UNE INSTALLATION DE CHAUFFAGE À DISTANCE CÔTÉ UTILISATEUR

(43) Veröffentlichungstag der Anmeldung: 28.07.2021
(73) Patentinhaber: Aqotec GmbH, 4890 Weissenkirchen im Attergau (AT)
(72) Erfinder: Holzinger, Christian, 4890 Weißenkirchen im Attergau (AT)
(74) Vertreter: 2s-ip Schramm Schneider Bertagnoll Patent- und Rechtsanwälte Part mbB

(56) Entgegenhaltungen:
- WO-A1-02/090832
- WO-A1-2016/120638
- DE-A1- 3 505 082
- KR-B1- 102 029 825

## Beschreibung

Die Erfindung betrifft eine Fernwärme-Heizungsanlage die eine Überwachungseinrichtung umfasst, und ein Verfahren zum Überwachen einer abnehmerseitigen Fernwärme-Heizungsanlage.

Derartige Überwachungseinrichtungen werden in Fernwärme-Heizungsanlagen eingesetzt, die mit einem Fernwärmenetz der Fernwärme-Versorgungsseite sind. Die Fernwärme-Versorgungsseite produziert Heißwasser und stellt dieses über ein Fernwärmenetz den daran angeschlossenen lokalen Fernwärme-Abnehmern bereit, die damit das Wasser ihrer lokale Heizungs- und/oder das Brauchwasser ihrer Warnwasserzubereitungsanlage beheizen. Fernwärme-Abnehmer sind typischerweise öffentliche oder private Anwesen, Haushalte und Unternehmen jeglicher Art. All diese werden im Folgenden als Abnehmerseite bezeichnet, während Fernwärme-Produzent und Fernwärmeverteilungsnetz hier als Fernwärme-Versorgungsseite bezeichnet werden. Die Gesamtheit der Installationen im Anwesen der Abnehmerseite, also die primärseitigen Heißwasservorlauf- und Kaltwasserrücklaufleitungen, Wärmetauscher, lokale (sekundärseitige) Heizungs- und/oder Warnwasserzubereitungsanlagen wird im Folgenden als abnehmerseitige Fernwärme-Heizungsanlage bezeichnet.

Die KR 102 029 825 B1 betrifft ein Fernwärme-Rohrleitungsmodul mit einem integrierten Wärmetauscher sowie jeweils primär- und sekundärseitige Vorlauf- und Rücklaufleitungen, wobei in den primärseitigen Vorlauf ein Magnetventil angeordnet ist, das die primärseitige Heißwasserzufuhr in den Wärmetauscher reguliert.

Dem primärseitig aus dem Fernwärmenetz angelieferten Heißwasser wird in dem Wärmetauscher die Wärme entzogen, indem das Wasser der Sekundärseite erwärmt wird. Die primärseitigen und sekundärseitigen Wasserkreise sind also voneinander getrennt. Der Wärmetauscher ist Teil einer Übergabestation im Anwesen der Abnehmerseite. Diese Übergabestation befindet sich üblicherweise im zu versorgenden Anwesen in einer dafür vorgesehenen Räumlichkeit. Das von der Versorgungsseite angelieferte Heißwasser hat üblicherweise eine Temperatur zwischen 80 und 130 Grad Celsius.

Ebenfalls untergebracht in dieser Räumlichkeit ist ein Teil der abnehmerseitigen Fernwärme-Heizungsanlage. Diese abnehmerseitige Heizungsanlage umfasst üblicherweise eine Regelungsanordnung, welche über die Einstellung und Überwachung von Parametern, wie zum Beispiel Vorlauftemperatur, Rücklauftemperatur, Pumpengeschwindigkeiten und dergleichen mehr, das Anwesen mit der gewünschten Wärmeenergie und/oder dem Warmwasser versorgt.

Die Trennung der Wasserkreise zwischen primärseitiger Fernwärme-Versorgungsseite und sekundärseitiger Fernwärme-Abnehmerseite ermöglicht eine Regelung der abnehmerseitigen Fernwärme-Heizungsanlage unabhängig von der Versorgungsseite. Eine Störung innerhalb der Heizungsanlage der Abnehmerseite muss daher keine Auswirkung auf die Versorgungsseite haben.

Dagegen kann zum Beispiel ein Rohrbruch auf der Primärseite unmittelbar vor dem Wärmetauscher regelmäßig dazu führen, dass zeitlich unbegrenzt Heißwasser aus dem Versorgungsnetz in dem Anwesen austritt. Aufgrund der sehr hohen Temperaturen kann eine derartige Havarie zu gefährlichen Situationen im zu versorgenden Anwesen führen und auch eine erhebliche Störung des Fernwärmenetzes nach sich ziehen.

Aufgabe der Erfindung ist es daher, eine Einrichtung und ein Verfahren zur Überwachung einer abnehmerseitigen Fernwärme-Heizungsanlage bereitzustellen, mit welchen eine derartige Gefahr zumindest gelindert wird.

Diese Aufgabe wird durch die Überwachungseinrichtung und das Verfahren zur Überwachung einer Fernwärme-Heizungsanlage gemäß den unabhängigen Ansprüchen gelöst. Vorteilhafte Weiterbildungen der Erfindung sind in den jeweiligen abhängigen Ansprüchen definiert.

Bereitgestellt wird demnach eine Fernwärme-Heizungsanlage umfassend einen primärseitigen Wasserkreis, der mit einem Fernwärmenetz gekoppelt ist und daran angeschlossen abnehmerseitig einen Heißwasservorlauf sowie einen Kaltwasserrücklauf aufweist, und einen sekundärseitigen Wasserkreis, der mit der abnehmerseitigen Heizungsanlage gekoppelt ist, wobei die Wasserkreise jeweils in einer abnehmerseitigen Räumlichkeit angeordnet sind, wobei die Fernwärme-Heizungsanlage eine Überwachungseinrichtung umfasst, die Überwachungseinrichtung aufweisend:
eine Erfassungseinrichtung, die zur Detektion von Wasserverlust des primärseitigen Wasserkreises in der abnehmerseitigen Räumlichkeit,
eine Meldeeinrichtung, die ausgestaltet ist, bei Detektion von Wasserverlust Alarmmeldungen an einen Service und an eine abnehmerseitige Bedieneinrichtung der Fernwärme-Heizungsanlage zu senden,
steuerbare Ventileinrichtungen, die zwischen dem primärseitigen Wasserkreis und dem Fernwärmenetz angeordnet sind und ausgestaltet sind, den primärseitigen Wasserkreis von dem Fernwärmenetz zu trennen bzw. mit diesem zu verbinden,
wobei diejenige Ventileinrichtung, die im primärseitigen Wasserkreis den Heißwasservorlauf öffnet und schließt, im Heißwasservorlauf stromaufwärts näher an dem Fernwärmenetz als andere wasserführende Installationen des primärseitigen Vorlaufs der abnehmerseitigen Fernwärme-Heizungsanlage liegt,
wobei diejenige Ventileinrichtung, die im primärseitigen Wasserkreis den Kaltwasserrücklauf öffnet und schließt, stromabwärts näher an dem Fernwärmenetz als andere wasserführende Installationen des primärseitigen Rücklaufs der abnehmerseitigen Fernwärme-Heizungsanlage liegt;
wobei die Überwachungseinrichtung weiter ausgestaltet ist, bei Detektion des Wasserverlusts die Ventileinrichtungen in der abnehmerseitigen Räumlichkeit derart anzusteuern, dass sie den primärseitigen Wasserkreis vom dem Fernwärmenetz trennen.

Mit Hilfe der ansteuerbaren Ventileinrichtungen kann also der primärseitige Wasserkreis vom Fernwärmenetz getrennt werden, so dass bei einem Leck im primärseitigen Wasserkreis kein weiteres Wasser aus dem Fernwärmenetz austreten kann.

Vorteilhaft ist es, wenn die Erfassungseinrichtung ausgestaltet ist, den Wasserverlust durch Feststellen einer Überschreitung eines Feuchtigkeitsschwellwerts, einer Temperaturdifferenz in der abnehmerseitigen Räumlichkeit oder einer Druckdifferenz, einer Wasserverlustrate der Versorgungsseite zu detektieren.

Weiter vorteilhaft ist es, wenn die Erfassungseinrichtung zumindest eines von Feuchtigkeitssensor, Drucksensor oder Temperatursensor umfasst.

Die Meldeeinrichtung kann eine Schnittstelle zu einem Kommunikationsnetzwerk umfassen, um eine Alarmmeldung via Kurznachricht oder Email zu versenden.

Die Überwachungseinrichtung kann weiter dazu ausgestaltet sein, erst bei Überschreiten eines vorbestimmten Intensitätskriteriums die Alarmmeldungen zu versenden und/oder die Ventileinrichtungen zu schließen.

Ferner kann die Überwachungseinrichtung weiter ausgestaltet sein, bei Detektion von Wasserverlust vorbestimmte Komponenten der Heizungsanlage in einen vorbestimmten Zustand zu versetzen.

Auf diese Weise kann z.B. der elektrische Strom der Heizungsanlage abgestellt werden oder können einzelne Pumpen angehalten werden, so dass die Heizungsanlage besser geschützt werden kann.

Der vorbestimmte Zustand kann Netzspannungsfreiheit sein.

Der primärseitige Wasserkreis der Fernwärme-Versorgungsseite kann Fernwärmeleitungen, Wärmetauscher, Ventile umfassen.

Die Erfindung umfasst auch ein Verfahren zur Überwachung einer abnehmerseitige Fernwärme-Heizungsanlage, die Fernwärme-Heizungsanlage umfassend einen primärseitigen Wasserkreis, der mit einem Fernwärmenetz gekoppelt ist, und einen sekundärseitigen Wasserkreis, der mit der abnehmerseitigen Heizungsanlage gekoppelt ist, wobei die Wasserkreise jeweils in einer abnehmerseitigen Räumlichkeit angeordnet sind, das Verfahren aufweisend:
Überwachen des primärseitigen Wasserkreises in der abnehmerseitigen Räumlichkeit auf Wasserverlust,
bei Detektion von Wasserverlust:
   Senden von Alarmmeldungen an einen Service und an eine abnehmerseitige Bedieneinrichtung der Fernwärme-Heizungsanlage zu;
Ansteuern von Ventileinrichtungen, die in der abnehmerseitigen Räumlichkeit zwischen dem primärseitigen Wasserkreis und dem Fernwärmenetz angeordnet sind und ausgestaltet sind, den primärseitigen Wasserkreis vom dem Fernwärmenetz zu trennen bzw. mit diesem zu verbinden derart, dass sie den primärseitigen Wasserkreis vom dem Fernwärmenetz trennen.

Hierbei kann der Wasserverlust durch Feststellen einer Überschreitung eines Feuchtigkeitsschwellwerts, einer Temperaturdifferenz in der abnehmerseitigen Räumlichkeit oder einer Druckdifferenz, einer Wasserverlustrate der Versorgungsseite detektiert werden.

Die Alarmmeldung kann über eine Schnittstelle zu einem Kommunikationsnetzwerk via Kurznachricht oder Email versende werden.

Das Verfahren kann ausgestaltet sein, dass erst bei Überschreiten eines vorbestimmten Intensitätskriteriums die Alarmmeldungen versendet und/oder die Ventileinrichtungen geschlossen werden.

Ferner kann das Verfahren ausgestaltet sein, dass bei Detektion von Wasserverlust vorbestimmte Komponenten der Heizungsanlage in einen vorbestimmten Zustand versetzt werden.

Der vorbestimmte Zustand kann hierbei Netzspannungsfreiheit sein.

Die Erfindung wird anhand von Ausführungsbeispielen und der Zeichnung näher beschrieben. In der Zeichnung zeigt:

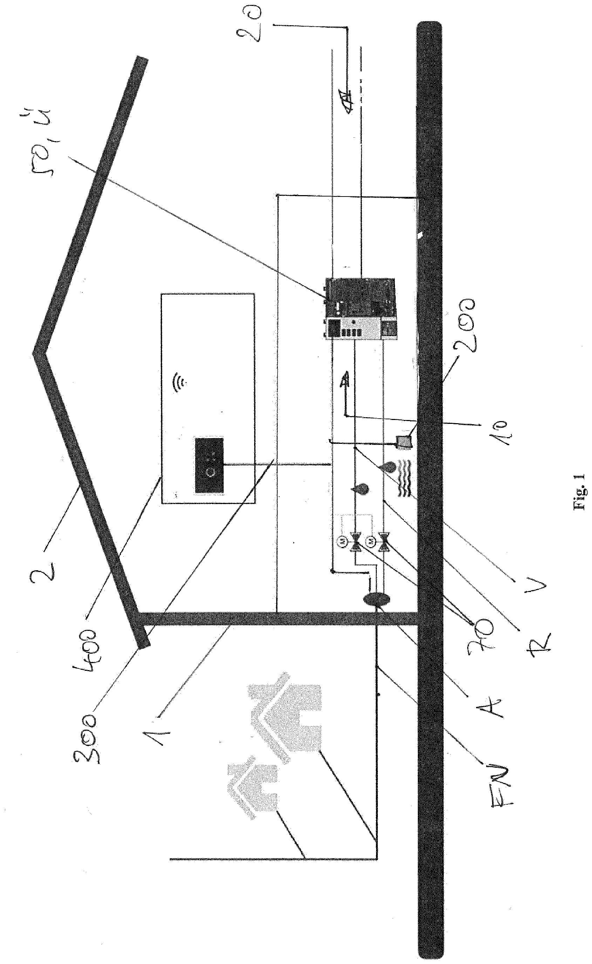

**Fig. 1** eine Anordnung entsprechend einem Ausführungsbeispiel der Erfindung.

In Fig. 1 ist ein mit Fernwärme zu versorgendes Anwesen 1 illustriert, welches eine Räumlichkeit 3 umfasst, in der sich an der Schnittstelle zwischen Fernwärmenetz FN auf der Primärseite 10 und sekundärseitigem Teil 20 der abnehmerseitigen Fernwärme-Heizungsanlage die Übergabestation Ü mit einem Wärmetauscher 50 befindet. Primärseitig wird das heiße Medium - in der Regel also Heißwasser - über einen Vorlauf V durch den Wärmetauscher 50 hindurchgeleitet und - nach Entzug von Wärmeenergie abgekühlt - über den Rücklauf R abgeführt. Im Wärmetauscher 50 wird hierdurch das Wärmetransportmedium der Sekundärseite 20, in der Regel Wasser, erwärmt. Von dort erfolgt die Versorgung des Anwesens 2 mit Wärme zum Heizen des Anwesens und/oder zum Heizen von Brauchwasser. Heizung und Warmwasseraufbereitung werden durch eine Regelungsanordnung unabhängig von der Primärseite gesteuert. Ferner sind im Primärkreis mechanisch bedienbare Ventileinrichtungen vorhanden, mit welchen die Hausinstallation von dem Fernwärmenetz abgekoppelt werden kann.

Erfindungsgemäß ist nun eine Überwachungseinrichtung für die abnehmerseitige Fernwärme-Heizungsanlage vorgesehen, die eine Erfassungseinrichtung 200 aufweist, die zur Detektion eines Wasserverlustes von Komponenten der Fernwärme-Heizungsinstallation ausgestaltet ist. Dieser Wasserverlust kann über eine erhöhte Feuchtigkeit in dem Raum detektiert werden, welcher den Wärmetauscher und die primärseitigen Heißwasservorlauf- und Kaltwasserrücklaufleitungen beherbergt. Der Wasserverlust kann auch über einen Druckverlust im Fernwärme-Primärkreis detektiert werden, oder aber über eine starke Dampfbildung oder Temperaturerhöhung in dem betreffenden Raum aufgrund des ausgetretenen Heißwassers.

Ferner weist die Überwachungseinrichtung eine Meldeeinrichtung 300 auf, die ausgestaltet ist, bei Detektion des Wasserverlustes Alarmmeldungen zu generieren und zu senden. Diese Alarmmeldungen werden zum Beispiel an einen Notdienst gesendet, der die Behebung der Havarie veranlassen kann, und andererseits an eine abnehmerseitige Bedieneinrichtung 400 der Fernwärme-Heizungsanlage. Diese abnehmerseitige Bedieneinrichtung 400 kann ein Anzeige- und Bedienungsgerät sein, welches zum Beispiel in einem Wohnraum stationär angeordnet ist, oder ein tragbares Kommunikationsgerät wie zum Beispiel ein Smartphone, Tablet oder Notebook, welche über eine Kommunikationsschnittstelle angesprochen werden können.

Die Überwachungseinrichtung ist weiter ausgestaltet, bei Detektion des Wasserverlustes Ventileinrichtungen 70 zu schließen, welche den primärseitigen Wasserkreis 10 mit dem Fernwärmenetz FN verbinden. Diese Ventileinrichtungen sind als elektrisch gesteuerte Ventile im Heißwasservorlauf V und im Kaltwasserrücklauf R der Primärseite 10 in den Fernwärme-Leitungen der Abnehmerseite angeordnet, und zwar innerhalb des Anwesens möglichst nahe derjenigen Außenwand 1 der Räumlichkeit 3 des Anwesens 2, an welcher der primärseitige Wasserkreis 10 in das Fernwärmenetz FN hinausgeführt ist, also die primärseitigen Leitungen durch die Außenwand 1 hindurchtreten. Dann lässt sich der gesamte abnehmerseitige primärseitige Wasserkreis vom Fernwärmenetz FN trennen. Mit anderen Worten ausgedrückt liegt erfindungsgemäß diejenige Ventileinrichtung 70, die im Primärkreislauf 10 den Heißwasservorlauf V öffnet und schließt, im Heißwasservorlauf V stromaufwärts näher an dem Fernwärmenetz FN als andere wasserführende Installationen des primärseitigen Vorlaufs V der abnehmerseitigen Fernwärme-Heizungsanlage, während diejenige Ventileinrichtung 70, die im Primärkreislauf 10 den Kaltwasserrücklauf R öffnet und schließt, stromabwärts näher an dem Fernwärmenetz FN als andere wasserführende Installationen des primärseitigen Rücklaufs R der abnehmerseitigen Fernwärme-Heizungsanlage. Zwischen den Ventileinrichtungen 70 und der Außenwand 1 des Anwesens sind lediglich Rohrenden und Anschlüsse A des Fernwärmenetzes FN nageordnet.

Damit die Überwachungseinrichtung tolerant gegen nur geringen Wasserverlust ist, kann vorgesehen sein, dass eine Alarmmeldung erst bei Überschreiten eines Feuchtigkeitsschwellwerts, einer Temperaturdifferenz, einer Druckdifferenz oder einer vorbestimmten Wasserverlustrate generiert wird. Die entsprechenden Schwellwerte können in der Überwachungseinrichtung definiert und hinterlegt sein.

Des Weiteren kann die Überwachungseinrichtung ausgestaltet sein, bei Detektion des Wasserverlustes bestimmte Komponenten der Heizungsanlage in einen vorbestimmten Zustand zu versetzen. Der vorbestimmte Zustand kann zum Beispiel sein, dass Komponenten vom Stromnetz genommen werden, dass Steuerungseinrichtungen heruntergefahren werden, dass Pumpen abgestellt werden, oder dass weitere Ventile auf der Sekundärseite geschlossen werden. Auf diese Weise können Folgeschäden minimiert werden.

Um die Detektionszuverlässigkeit weiter zu steigern, können verschiedene Parameter erfasst werden und die erfassten Werte miteinander verknüpft werden. Hierbei kann vorgesehen sein, die Alarmmeldung an die abnehmerseitige Bedieneinrichtung bereits bei Überschreiten eines geringeren Schwellwerts auszusenden, während die Alarmmeldung an die Fernwärme-Versorgungsseite erst bei Überschreitung eines höheren Schwellwerts herausgegeben wird. Auch kann vorgesehen sein, die Ventileinrichtungen 70 erst bei Überschreiten eines sehr hohen Schwellwerts zu veranlassen. Des Weiteren können verschiedene Sensoren bzw. von diesen erfasste Messwerte (z.B. Temperaturen, Drücke, Feuchtigkeiten, Wasserstände) miteinander verknüpft werden, um eine zuverlässigere Detektion des Wasserverlust-Ereignisses zu ermöglichen und um Fehlalarme zu minimieren.

Auch kann vorgesehen sein, die Ventileinrichtungen 70 nach einer vorbestimmten Zeit wieder zu öffnen, zum Beispiel dann, wenn keine weitere Detektion eines Wasserverlust-Ereignisses mehr erfolgt ist. Dann können auch Entwarnungsmeldungen herausgegeben werden, und die Heizungsanlage kann wieder hochgefahren werden.

Die Sensoren können über Leitungen oder über drahtlose Kommunikationsverbindungen mit der Erfassungseinrichtung 200 gekoppelt sein.

## Patentansprüche

1. Fernwärme-Heizungsanlage umfassend einen primärseitigen Wasserkreis, der mit einem Fernwärmenetz (FN) gekoppelt ist und daran angeschlossen abnehmerseitig einen Heißwasservorlauf (V) sowie einen Kaltwasserrücklauf (R) aufweist, und einen sekundärseitigen Wasserkreis, der mit der abnehmerseitigen Heizungsanlage gekoppelt ist, wobei die Wasserkreise jeweils in einer abnehmerseitigen Räumlichkeit (3) angeordnet sind, wobei die Fernwärme-Heizungsanlage eine Überwachungseinrichtung umfasst, die Überwachungseinrichtung aufweisend:
eine Erfassungseinrichtung (200), die zur Detektion von Wasserverlust des primärseitigen Wasserkreises (10) in der abnehmerseitigen Räumlichkeit (3),
eine Meldeeinrichtung (300), die ausgestaltet ist, bei Detektion von Wasserverlust Alarmmeldungen an einen Service und an eine abnehmerseitige Bedieneinrichtung (400) der Fernwärme-Heizungsanlage zu senden,
steuerbare Ventileinrichtungen (70), die zwischen dem primärseitigen Wasserkreis und dem Fernwärmenetz angeordnet sind und ausgestaltet sind, den primärseitigen Wasserkreis von dem Fernwärmenetz zu trennen bzw. mit diesem zu verbinden,
wobei diejenige Ventileinrichtung (70), die im primärseitigen Wasserkreis (10) den Heißwasservorlauf (V) öffnet und schließt, im Heißwasservorlauf (V) stromaufwärts näher an dem Fernwärmenetz (FN) als andere wasserführende Installationen des primärseitigen Vorlaufs (V) der abnehmerseitigen Fernwärme-Heizungsanlage liegt,
wobei diejenige Ventileinrichtung (70), die im primärseitigen Wasserkreis (10) den Kaltwasserrücklauf (R) öffnet und schließt, stromabwärts näher an dem Fernwärmenetz (FN) als andere wasserführende Installationen des primärseitigen Rücklaufs (R) der abnehmerseitigen Fernwärme-Heizungsanlage liegt;
wobei die Überwachungseinrichtung weiter ausgestaltet ist, bei Detektion des Wasserverlusts die Ventileinrichtungen (70) in der abnehmerseitigen Räumlichkeit (3) derart anzusteuern, dass sie den primärseitigen Wasserkreis von dem Fernwärmenetz (FN) trennen.

2. Fernwärme-Heizungsanlage nach Anspruch 1, **dadurch gekennzeichnet, dass** die Erfassungseinrichtung (200) ausgestaltet ist, den Wasserverlust durch Feststellen einer Überschreitung eines Feuchtigkeitsschwellwerts, einer Temperaturdifferenz in der abnehmerseitigen Räumlichkeit (3) oder einer Druckdifferenz, einer Wasserverlustrate der Versorgungsseite zu detektieren.

3. Fernwärme-Heizungsanlage nach einem der vorherigen Ansprüche, **dadurch gekennzeichnet, dass** die Erfassungseinrichtung (200) zumindest eines von Feuchtigkeitssensor, Drucksensor oder Temperatursensor umfasst.

4. Fernwärme-Heizungsanlage nach einem der vorherigen Ansprüche, **dadurch gekennzeichnet, dass** die Meldeeinrichtung (300) eine Schnittstelle zu einem Kommunikationsnetzwerk umfasst, um eine Alarmmeldung via Kurznachricht oder Email zu versenden.

5. Fernwärme-Heizungsanlage nach einem der vorherigen Ansprüche, **dadurch gekennzeichnet, dass** sie weiter dazu ausgestaltet ist, erst bei Überschreiten eines vorbestimmten Intensitätskriteriums die Alarmmeldungen zu versenden und/oder die Ventileinrichtungen (70) zu schließen.

6. Fernwärme-Heizungsanlage nach einem der vorherigen Ansprüche, **dadurch gekennzeichnet, dass** sie weiter ausgestaltet ist, bei Detektion von Wasserverlust vorbestimmte Komponenten der Heizungsanlage in einen vorbestimmten Zustand zu versetzen.

7. Fernwärme-Heizungsanlage nach dem vorherigen Anspruch, **dadurch gekennzeichnet, dass** der vorbestimmte Zustand Netzspannungsfreiheit ist.

8. Fernwärme-Heizungsanlage nach einem der vorherigen Ansprüche, **dadurch gekennzeichnet, dass** der primärseitige Wasserkreis (10) Fernwärmeleitungen, Wärmetauscher, Ventile umfasst.

9. Verfahren zur Überwachung einer abnehmerseitige Fernwärme-Heizungsanlage nach Anspruch 1, das Verfahren aufweisend:
Überwachen des primärseitigen Wasserkreises in der abnehmerseitigen Räumlichkeit (3) auf Wasserverlust,
bei Detektion von Wasserverlust:
Senden von Alarmmeldungen an einen Service und an eine abnehmerseitige Bedieneinrichtung (400) der Fernwärme-Heizungsanlage zu;
Ansteuern von Ventileinrichtungen (70), die in der abnehmerseitigen Räumlichkeit (3) zwischen dem primärseitigen Wasserkreis und dem Fernwärmenetz angeordnet sind und ausgestaltet sind, den primärseitigen Wasserkreis vom dem Fernwärmenetz zu trennen bzw. mit diesem zu verbinden derart, dass sie den primärseitigen Wasserkreis vom dem Fernwärmenetz trennen.

10. Verfahren nach Anspruch 9, **dadurch gekennzeichnet, dass** der Wasserverlust durch Feststellen einer Überschreitung eines Feuchtigkeitsschwellwerts, einer Temperaturdifferenz in der abnehmerseitigen Räumlichkeit (3) oder einer Druckdifferenz, einer Wasserverlustrate der Versorgungsseite detektiert wird.

11. Verfahren nach einem der Ansprüche 9 oder 10, **dadurch gekennzeichnet, dass** die Alarmmeldung über eine Schnittstelle zu einem Kommunikationsnetzwerk via Kurznachricht oder Email versende wird.

12. Verfahren nach einem der Ansprüche 9 bis 11, **dadurch gekennzeichnet, dass** erst bei Überschreiten eines vorbestimmten Intensitätskriteriums die Alarmmeldungen versendet und/oder die Ventileinrichtungen (70) geschlossen werden.

13. Verfahren nach einem der Ansprüche 9 bis 12, **dadurch gekennzeichnet, dass** bei Detektion von Wasserverlust vorbestimmte Komponenten der Heizungsanlage in einen vorbestimmten Zustand versetzt werden.

14. Verfahren nach dem vorherigen Anspruch, **dadurch gekennzeichnet, dass** der vorbestimmte Zustand Netzspannungsfreiheit ist.

## Claims

1. District heating system, comprising a primary water circuit that is coupled to a district heating network (FN) and has, connected thereto on the customer side, a hot water supply pipe (V) and a cold water return pipe (R), said system also comprising a secondary water circuit that is coupled to the customer-side heating system, wherein each water circuit is arranged in a customer-side premises (3), wherein the district heating system comprises a monitoring device, the monitoring device having:
a detection device (200) used to detect water loss from the primary water circuit (10) in the customer-side premises (3),
a reporting device (300) designed to send alarm messages to a service and to a customer-side operating device (400) of the district heating system when water loss is detected,
controllable valve devices (70) which are arranged between the primary water circuit and the district heating network and are designed to separate the primary water circuit from or connect the primary water circuit to the district heating network,
wherein the valve device (70) which opens and closes the hot water supply pipe (V) in the primary water circuit (10) is located closer to the district heating network (FN) in the upstream direction in the hot water supply pipe (V) than other water-guiding fittings of the primary supply pipe (V) of the customer-side district heating system,
wherein the valve device (70) which opens and closes the cold water return pipe (R) in the primary water circuit (10) is closer to the district heating network (FN) in the downstream direction than other water-guiding fittings of the primary return pipe (R) of the customer-side district heating system;
wherein the monitoring device is also designed to control the valve devices (70) in the customer-side premises (3) in such a way that said devices separate the primary water circuit from the district heating network (FN) when water loss is detected.

2. District heating system according to claim 1, **characterized in that** the detection device (200) is designed to detect water loss by determining whether a moisture threshold value, a temperature difference in the customer-side premises (3), or a pressure difference or a water loss rate on the supply side has been exceeded.

3. District heating system according to any of the preceding claims, **characterized in that** the detection device (200) comprises at least one of a moisture sensor, a pressure sensor, or a temperature sensor.

4. District heating system according to any of the preceding claims, **characterized in that** the reporting device (300) comprises an interface to a communication network in order to send an alarm message via short message or email.

5. District heating system according to any of the preceding claims, **characterized in that** it is also designed to send the alarm messages and/or close the valve devices (70) only when a predetermined intensity criterion is exceeded.

6. District heating system according to any of the preceding claims, **characterized in that** it is also designed to put predetermined components of the heating system into a predetermined state when water loss is detected.

7. District heating system according to the preceding claim, **characterized in that** the predetermined state is without grid voltage.

8. District heating system according to any of the preceding claims, **characterized in that** the primary water circuit (10) comprises district heating lines, heat exchangers, and valves.

9. Method for monitoring a customer-side district heating system according to claim 1, the method comprising:
monitoring the primary water circuit in the customer-side premises (3) for water loss,
when water loss is detected:
sending alarm messages to a service and to a customer-side operating device (400) of the district heating system;
controlling valve devices (70) which are arranged in the customer-side premises (3) between the primary water circuit and the district heating network and are designed to separate the primary water circuit from or connect the primary water circuit to the district heating network in such a way that said devices separate the primary water circuit from the district heating network.

10. Method according to claim 9, **characterized in that** the water loss is detected by determining whether a moisture threshold value, a temperature difference in the customer-side premises (3), or a pressure difference or a water loss rate on the supply side has been exceeded.

11. Method according to either claim 9 or claim 10, **characterized in that** the alarm message is sent via an interface to a communication network via a short message or email.

12. Method according to any of claims 9 to 11, **characterized in that** the alarm messages are sent and/or the valve devices (70) are closed only when a predetermined intensity criterion is exceeded.

13. Method according to any of claims 9 to 12, **characterized in that** predetermined components of the heating system are put into a predetermined state when water loss is detected.

14. Method according to the preceding claim, **characterized in that** the predetermined state is without grid voltage.

## Revendications

1. Système de chauffage urbain comprenant un circuit d'eau côté primaire qui est couplé à un réseau de chauffage urbain (FN) et présente, côté consommateur, un départ d'eau chaude (V) ainsi qu'un retour d'eau froide (R) raccordés audit réseau de chauffage urbain, et un circuit d'eau côté secondaire qui est couplé au système de chauffage côté consommateur, les circuits d'eau étant respectivement disposés dans un local côté consommateur (3), le système de chauffage urbain comprenant un dispositif de surveillance, le dispositif de surveillance présentant :
un dispositif de détection (200) qui est utilisé pour détecter une perte d'eau du circuit d'eau côté primaire (10) dans le local côté consommateur (3),
un dispositif de signalement (300) qui est configuré pour envoyer des messages d'alarme à un service et à un dispositif de commande côté consommateur (400) du système de chauffage urbain lorsqu'une perte d'eau est détectée,
des dispositifs de vannes (70) commandables qui sont disposés entre le circuit d'eau côté primaire et le réseau de chauffage urbain et sont conçus pour séparer le circuit d'eau côté primaire du réseau de chauffage urbain ou pour le relier à celui-ci,
ledit dispositif de vanne (70), lequel ouvrant et fermant le départ d'eau chaude (V) dans le circuit d'eau primaire (10), étant plus proche du réseau de chauffage urbain (FN) en amont du départ d'eau chaude (V) que d'autres installations aquifères du départ côté primaire (V) du système de chauffage urbain côté consommateur,
ledit dispositif de vanne (70), lequel ouvrant et fermant le retour d'eau froide (R) dans le circuit d'eau côté primaire (10), étant plus proche du réseau de chauffage urbain (FN) en aval que d'autres installations aquifères du retour côté primaire (R) du système de chauffage urbain côté consommateur ;
le dispositif de surveillance étant en outre configuré pour commander les dispositifs de vannes (70) dans le local côté consommateur (3) lors de la détection de la perte d'eau, de telle manière qu'ils séparent le circuit d'eau côté primaire du réseau de chauffage urbain (FN).

2. Système de chauffage urbain selon la revendication 1, **caractérisé en ce que** le dispositif de détection (200) est configuré pour détecter la perte d'eau en déterminant un dépassement d'une valeur seuil d'humidité, une différence de température dans le local côté consommateur (3) ou une différence de pression, un taux de perte d'eau du côté de l'alimentation.

3. Système de chauffage urbain selon l'une des revendications précédentes, **caractérisé en ce que** le dispositif de détection (200) comprend un capteur d'humidité, et/ou un capteur de pression, et/ou un capteur de température,

4. Système de chauffage urbain selon l'une des revendications précédentes, **caractérisé en ce que** le dispositif de signalement (300) comprend une interface avec un réseau de communication afin d'envoyer un message d'alarme par message court ou par courrier électronique.

5. Système de chauffage urbain selon l'une des revendications précédentes, **caractérisé en ce qu'**il est en outre configuré pour n'envoyer les messages d'alarme et/ou pour fermer les dispositifs de vannes (70) que lorsqu'un critère d'intensité prédéfini est dépassé.

6. Système de chauffage urbain selon l'une des revendications précédentes, **caractérisé en ce qu'**il est en outre configuré pour placer des composants prédéfinis du système de chauffage dans un état prédéfini lors de la détection d'une perte d'eau.

7. Système de chauffage urbain selon la revendication précédente, **caractérisé en ce que** l'état prédéfini est l'absence de tension de réseau.

8. Système de chauffage urbain selon l'une des revendications précédentes, **caractérisé en ce que** le circuit d'eau côté primaire (10) comprend des conduites de chauffage urbain, des échangeurs de chaleur, des vannes.

9. Procédé permettant la surveillance d'un système de chauffage urbain côté consommateur selon la revendication 1, le procédé présentant :
la surveillance du circuit d'eau côté primaire dans le local côté consommateur (3) pour détecter les pertes d'eau,
en cas de détection de perte d'eau :
l'envoi de messages d'alarme à un service et à un dispositif de commande côté consommateur (400) du système de chauffage urbain ;
la commande de dispositifs de vannes (70) qui sont disposés dans le local côté consommateur (3) entre le circuit d'eau côté primaire et le réseau de chauffage urbain et sont conçus pour séparer le circuit d'eau côté primaire du réseau de chauffage urbain ou pour le relier à celui-ci, de telle manière qu'ils séparent le circuit d'eau côté primaire du réseau de chauffage urbain.

10. Procédé selon la revendication 9, **caractérisé en ce que** la perte d'eau est détectée en déterminant un dépassement d'une valeur seuil d'humidité, une différence de température dans le local côté consommateur (3) ou une différence de pression, un taux de perte d'eau du côté de l'alimentation.

11. Procédé selon l'une des revendications 9 ou 10, **caractérisé en ce que** le message d'alarme est envoyé par l'intermédiaire d'une interface à un réseau de communication par l'intermédiaire d'un message court ou d'un courrier électronique.

12. Procédé selon l'une des revendications 9 à 11, **caractérisé en ce que** les messages d'alarme ne sont envoyés et/ou les dispositifs de vannes (70) ne sont fermés que lorsqu'un critère d'intensité prédéfini est dépassé.

13. Procédé selon l'une des revendications 9 à 12, **caractérisé en ce que** des composants prédéfinis du système de chauffage sont placés dans un état prédéfini lors de la détection d'une perte d'eau.

14. Procédé selon la revendication précédente, **caractérisé en ce que** l'état prédéfini est l'absence de tension de réseau.
